(19) Europäisches Patentamt
European Patent Office
Office européen des brevets

(11) EP 4 588 806 A1

(12) **EUROPEAN PATENT APPLICATION**

(43) Date of publication:
**23.07.2025  Bulletin 2025/30**

(21) Application number: **24305117.4**

(22) Date of filing: **19.01.2024**

(51) International Patent Classification (IPC):
**B64D 35/024** (2025.01)      **B64D 27/33** (2024.01)

(52) Cooperative Patent Classification (CPC):
**B64D 27/33; B64D 35/024; B64D 2221/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Aura Aero**
**31270 Cugnaux (FR)**

(72) Inventor: **PADULO, Mattia**
**32600 Endoufielle (FR)**

(74) Representative: **Plasseraud IP**
**104 Rue de Richelieu
CS92104
75080 Paris Cedex 02 (FR)**

(54) **A HYBRID AIRCRAFT ARCHITECTURE AND POWER MANAGEMENT METHOD**

(57)    It is disclosed a hybrid aircraft power management method, wherein the hybrid aircraft comprises:
- a plurality of electric power sources, comprising:
◦ at least two turbogenerators each comprising an internal combustion engine and at least one electrical generator, and
◦ at least a complementary power source, and

- a plurality of electric propulsion units,

each electric propulsion unit being connected to at least two turbogenerators and at least a complementary power source, and
wherein the hybrid aircraft power management method comprises:
- determining, for a considered flight, a flight power plan, and
- based on the determined flight power plan, operating the electric power sources during the flight,

wherein the flight power plan comprises a sequence of successive flight phases corresponding to respective electrical needs of the aircraft, and, for each flight phase, a respective subset of active electric power sources, wherein the subset of active electric power sources corresponding to a phase is determined to provide an amount of electrical power meeting the aircraft's electrical needs of the flight phase.

FIG. 5

Processed by Luminess, 75001 PARIS (FR)

EP 4 588 806 A1

## Description

### TECHNICAL FIELD

The present disclosure relates to a hybrid aircraft power management method and a hybrid aircraft power architecture. It finds notable application in aircraft dedicated to short to medium-haul flights.

### TECHNICAL BACKGROUND

In the context of adapting human activities in order to reduce their carbon emissions and mitigate climate change, there is a growing need to reduce the carbon footprint of aviation. As a consequence, intensive research is done on several levers that may contribute in said carbon footprint reduction, such as alternative fuels and alternative propulsive systems, embarking means such as electrical batteries or hydrogen fuel cells to progressively replace the use of kerosene-based turbomachines.

Accordingly, some hybrid propulsion architectures have been disclosed, comprising batteries coupled to electric propulsors, that complement or replace turbomachines. Such architectures are typically operated in order to rely as much as possible on the batteries and use the turbomachines in critical conditions or to prevent failure of the batteries.

It has also been disclosed in US 11,465763 a hybrid-electric, single aisle aircraft that has been designed in order to realize a significant reduction in emissions from commercial aviation.

This aircraft is propelled by a hybrid-electric propulsion architecture, comprising at least three electric propulsors coupled to a distribution bus, a plurality of energy storage units, and one or more gas turbine generators serving as range-extending generators, where all energy storage units and gas turbine generators are also coupled to the distribution bus to contribute to propulsion of the aircraft.

This document defines three types of ranges depending on a "degree of hybridization" of the propulsion, ranging from a zero degree (full turboelectric propulsion) to a 100% degree (full battery propulsion). However, this document does not disclose any specific strategy for aircraft power management enabling such emission reductions.

### DESCRIPTION OF THE INVENTION

The present disclosure aims at improving the prior art.

In particular, an aim of the present disclosure is providing a hybrid aircraft power management and hybrid aircraft power architecture that enable significant reductions in fuel consumption, and more generally in energy consumption, as compared to the prior art.

To this end, it is disclosed a hybrid aircraft power management method, wherein the hybrid aircraft comprises:

- a plurality of electric power sources, comprising:

    ○ at least two turbogenerators each comprising an internal combustion engine and at least one electrical generator, and
    ○ at least a complementary power source, and

- a plurality of electric propulsion units,

    each electric propulsion unit being connected to at least two turbogenerators and at least a complementary power source,
    and wherein the hybrid aircraft power management method comprises:

- determining, for a considered flight, a flight power plan, and
- based on the determined flight power plan, operating the electric power sources during the flight,

wherein the flight power plan comprises a sequence of successive flight phases corresponding to respective electrical needs of the aircraft, and, for each flight phase, a respective subset of active electric power sources, wherein the subset of active electric power sources corresponding to a phase is determined to provide an amount of electrical power meeting the aircraft's electrical needs of the flight phase.

According to the disclosed hybrid aircraft power management method, together with the configuration of the electric power sources and propulsion units, it is possible to use different sets of electrical power source to meet the aircraft's electrical needs, at different phases of the flight. In particular, the definition of the flight power plan may enable adjusting the operated electrical power sources of each phase to maximize electric power generation efficiency, and hence reduce energy consumption, in particular fuel consumption.

In embodiments, the flight power plan is determined to maximize efficiency of electric power generation by the electric power sources, during a determined time horizon, which can correspond to the duration of the flight.

In embodiments, the efficiency of electric power generation is defined as:

$$\frac{\int_{t0}^{tf} \sum_i P_i(t).Eff_i(t).dt}{\sum_i E_i}$$

wherein Pi(t) is the electric power delivered by a source i, Effi is the electric power generation efficiency of the source i, which may depend at least on the electric power delivered by the source, $E_i$ is the available energy of the source i over the determined time horizon, and $t_f$-$t_0$ is the

determined time horizon.

In embodiments, the method comprises an initial determination of the flight power plan before the flight, and at least one iteration of updating the flight power plan during the flight.

In embodiments, operating the electric power sources during the flight in accordance with the determined flight power plan comprises:

- receiving real-time data including:

   ◦ An amount of electrical power demand to meet the aircraft's electrical needs,
   ◦ operating conditions of the electric power sources, and

- based on the received real-time data, and on the flight power plan, select a subset of active electric power sources to provide the amount of electrical power, and issue a power supply command for each selected power source, comprising an electrical power value to be delivered by each power source.

In embodiments, operating the electric power sources during the flight further may comprise issuing at least one extinction request of the internal combustion of a turbogenerator that was previously active and that is not within the selected subset of active electric power sources.

In embodiments, operating the electric power sources during the flight further may comprise issuing at least one activation request of the internal combustion engine of a turbogenerator within the selected subset of active sources and which was previously off.

In embodiments, selecting a subset of active electric power sources based on the received real-time data and on the flight power plan comprises:

- determining at least one candidate subset of electric power sources based on the received real-time data, such that the candidate subset of electric power sources is able to deliver the amount of electrical power, and,
- in view of the flight power plan, selecting the candidate subset of electric power sources that satisfies a determined criterion on the numbers of turbogenerators ignition or extinction.

In embodiments, the determined criterion is of minimizing the number of turbogenerator's ignitions and extinctions over the whole flight.

In embodiments, the flight power plan comprises at least phases of takeoff, climb, cruise, descent and landing, where each phase is associated with a respective subset of active electric power sources.

In embodiments, the aircraft comprises two turbogenerators and at least one battery, and determining the flight power plan comprises:

- determining, for at least one phase of the flight, an amount of electrical power Pr needed by the aircraft, and
- determining the subset of active electric power sources associated with the phase by application of at least one of the following rules:

   ◦ when $P_r \leq P_{comp}$, where $P_{comp}$ is the amount of electrical power available from the battery (12), and said power from the battery $P_{comp}$ can be supplied over the whole current flight phase ($P_n$), then the subset of active power sources consists in the battery (12) only,
   ◦ when $P_{comp} < P_r \leq P_{TG}$ where $P_{TG}$ is the power available from a single turbogenerator (11) at current aircraft's operating conditions, then the subset of active power sources consists in a single turbogenerator (11),
   ◦ when $P_{TG} < P_r \leq P_{TG} + P_{comp}$, then the subset of active power sources consists in a single turbogenerator and the battery,
   ◦ when $P_{TG} + P_{comp} < P_r \leq 2*P_{TG}$, then the subset of active power sources consists in two turbogenerators, and
   ◦ when $2*P_{TG} < P_r$, then the subset of active power sources consists in two turbogenerators and the battery.

In embodiments, the flight power plan comprises at least the following phases and associated subsets of active electric power sources:

- during take-off and climb phase, the subset of active power sources includes at least the two turbogenerators,
- during the cruise phase, the subset of active power sources includes one or two turbogenerator(s), depending on the mean altitude of the cruise,
- during the descent and landing phases, the subset of active power sources includes the at least one battery and the two turbogenerators are turned off.

In embodiments, the aircraft further comprises non-propulsive systems, and the aircraft's electrical needs encompass propulsive and non-propulsive electrical needs.

According to another object, it is disclosed a hybrid power management device, for an aircraft comprising,

- a plurality of electric power sources, comprising:

   ◦ at least two turbogenerators each comprising an internal combustion engine and at least one electrical generator, and
   ◦ at least a complementary power source, and

- a plurality of electric propulsion units,

each electric propulsion unit being connected to at least two turbogenerators and at least a complementary power source,

wherein the device comprises at least a controller configured to:

- determine, for a considered flight, a flight power plan, wherein the flight power plan comprises a sequence of successive flight phases corresponding to respective electrical needs of the aircraft, each flight phase being associated with a respective subset of active electric power sources determined to provide an amount of electrical power meeting the aircraft's electrical needs, and

- operate the electric power sources during the flight in accordance with the determined flight power plan,

wherein the determination of the flight power plan is implemented to maximize electric power generation efficiency among the electric power sources, during a determined time horizon.

According to another object, it is also disclosed a hybrid aircraft power architecture, comprising:

- a plurality of electric power sources, comprising:

  ∘ at least two turbogenerators each comprising an internal combustion engine and at least one electrical generator, and
  ∘ at least a complementary power source, and

- a plurality of electric propulsion units,

  each electric propulsion unit being connected to at least two turbogenerators and at least a complementary power source,
  wherein the turbogenerators are sized such that:

  - said at least two turbogenerators operate at a pre-determined high efficiency operating point during cruise at high altitude,
  - a subset of turbogenerators, including at most all turbogenerators minus one, operate at a predetermined high efficiency operating point during cruise at intermediate altitude.

The disclosed aircraft power architecture, which can be classified as a series hybrid architecture, enables decoupling power generation from propulsion. This, in turn, enables operating the electric propulsion units on the one hand and the electric power sources on the other hand respectively at optimal operating points. The latter action is performed by suitably selecting various subsets of active electric power sources to provide the required electrical power for meeting the aircraft's electrical needs. As a consequence of such selection, the turbogenerators can be operated within a high efficiency operating range during cruise, or completely shut off during taxi and descent. This enables significant reduction in fuel consumption as compared to traditional architectures in which the turbomachines were sized for the takeoff phase and therefore operated at a sub-optimal operating point during cruise, and when at idle. To permit such operation, turbogenerators have to be suitably sized.

In embodiments, wherein the turbogenerators are sized such that:

- said at least two turbogenerators operate in a predetermined high efficiency range during cruise at high altitude, for a speed comprised between 120 % and 150 % of the stall speed at said altitude,
- a subset of turbogenerators including at most all turbogenerators minus one, operate in a pre-determined high efficiency range during cruise at intermediate altitude, for a speed comprised between 120 % and 150 % of the stall speed at said altitude.

In embodiments, the high efficiency operating point corresponds to a delivered electric power comprised between 90 and 100% of the maximal deliverable power.

In embodiments, the disclosed architecture further comprises at least one controller configured to implement the power management method according to the description above.

DETAILED DESCRIPTION OF THE DRAWINGS:

The present disclosure is illustrated by way of example, and not by way of limitation, in the figures of the accompanying drawings, in which like reference numerals reference to similar elements and in which:

- Figure 1 schematically represents a hybrid aircraft architecture according to an embodiment.
- Figure 2a is an example of electric power generation efficiency of a turbogenerator according to the delivered power (expressed as a ratio of the maximal deliverable power), at constant operating parameters.
- Figure 2b is an example of electric power generation efficiency of a battery according to the delivered power (expressed as a ratio of the maximal deliverable power).
- Figure 3 schematically represents the main steps of a power management method according to an embodiment.
- Figure 4 is an example decomposition of a typical flight in a plurality of flight phases.
- Figure 5 schematically shows an example of part of a flight power plan for a flight, including the selected subsets of active electric power sources at each phase of the flight.

DETAILED DESCRIPTION OF EMBODIMENTS

A hybrid aircraft power architecture and power management method will now be described.

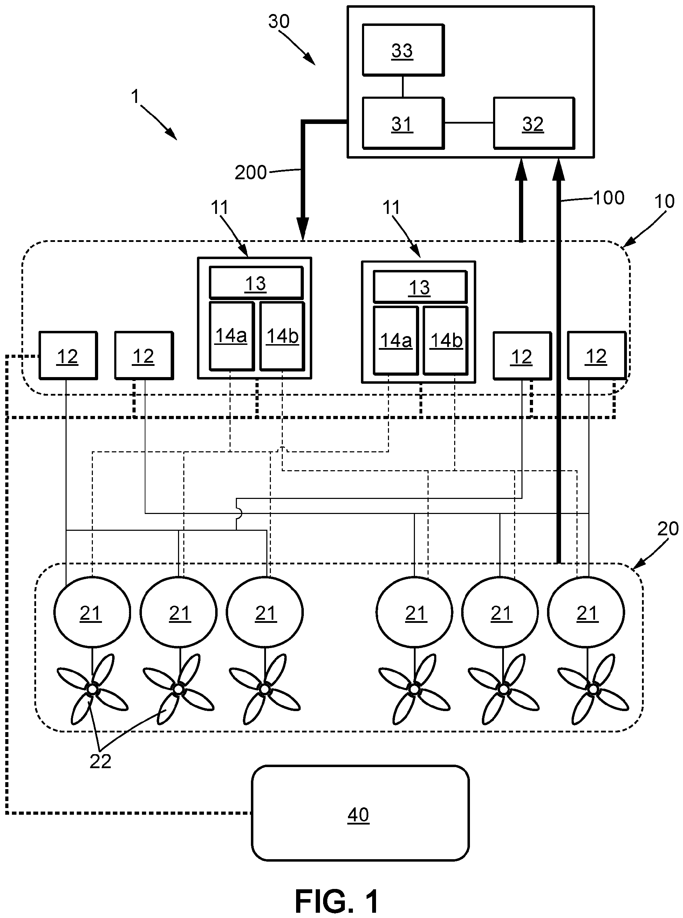

With reference to figure 1, the hybrid aircraft power architecture 1 is a series hybrid architecture comprising a plurality of electric power sources 10, feeding with electrical power a plurality of electric propulsion unit 20, and a plurality of non-propulsive electric systems or appliances 40.

The plurality of electric power sources 10 comprises at least two turbogenerators 11, and at least one complementary power source 12. The at least one complementary power source 12 can include one or more batteries, or one or more hydrogen fuel cells able to generate electrical power.

Each turbogenerator comprises an internal combustion engine 13. Each internal combustion engine may for instance be a turbomachine or a piston engine, and is configured to generate mechanical power from combustion of fuel. Each internal combustion engine typically comprises an output shaft (not shown).

Furthermore, each turbogenerator comprises at least one electrical generator 14 configured to convert mechanical power of the output shaft into electrical power. In embodiments, and as represented in the example of figure 1, each turbogenerator comprises two electrical generators 14a, 14b, each electrical generator being configured to convert mechanical power of the output shaft of the internal combustion engine 13 into electrical power. In embodiments, each turbogenerator comprises an even number, greater than two, of electrical generators.

In embodiments, the number of turbogenerators 11 may be greater than 2, for instance the architecture may comprise four turbogenerators. The number of complementary power sources 12 may also be greater than two, for instance equal to 3 or 4.

Each propulsion unit 20 comprises an electrical motor 21, configured to convert electrical power provided by one or more of the power sources, into mechanical power, and a propeller 22, rotatably driven by said motor.

Each propulsion unit 20 is connected to at least two turbogenerators 11, and to at least a complementary power source 12, enabling the propulsion unit 20 to be selectively fed with electrical power by any subset among said at least two turbogenerators 11 and complementary power source 12, which results in a decoupling between power production and propulsion. For instance, all propulsion units 20 may be provided with electrical power delivered by one or two turbogenerators 11, optionally complemented with electrical power provided by the complementary power source(s) 12.

The non-propulsive electric systems 40 encompass any system that requires electrical power for its operation, and which do not contribute to aircraft propulsion. These may include one or more of the following:

- Avionics systems: all electronic devices and systems used for navigation, communication, and monitoring of the aircraft. This includes navigation computers, communication radios, radar systems, transponders, and flight control computers (including control computers, sensors, and actuators)
- Electric actuators, such as those that may be required move flight control surfaces, to retract and extend the landing gear, to brake, to operate the doors
- Lighting systems, such as navigation lights, landing lights, taxi lights, and cabin lighting.
- Environmental Control System (ECS), for maintaining a comfortable and safe environment within the aircraft cabin. It includes systems for air conditioning, pressurization, and heating, all of which require electrical power.
- Emergency Systems, which may include emergency lighting, emergency oxygen systems, and other safety-critical equipment.
- Anti-Icing/De-Icing Systems,
- Communication Systems, apart from avionics, such as intercoms and public address systems within the aircraft.
- Cabin Systems: may include galley equipments (ovens, coffee makers, refrigerators,...), plus various amenities such as power outlets for passengers, in-flight entertainment systems, which may include displays, audio systems, and Wi-Fi connectivity.

In embodiments, the non-propulsive electrical systems 40 are also connected to said at least two turbogenerators 11 and to at least a complementary power source 12, also enabling that these non-propulsive systems be fed with electrical power by various subsets of said electric power sources. Alternatively, non-propulsive electric power may be provided by a specifically dedicated power source (not shown).

According to a particular embodiment represented in figure 1, the architecture 1 may comprise an even number of propulsion units 12, with the propellers 22 being symmetrically disposed on the wings with respect to the fuselage of the aircraft. Further, when the turbogenerators 11 each comprise two electrical generators 14, two groups comprising the same number of propulsion units 20 may be defined, and the two electrical generators of each turbogenerator may be connected respectively to a respective group of electrical propulsion unit. This is a way to ensure that each turbogenerator is indeed able to deliver electrical power to both group of propulsion units.

At least some of the electrical power sources 10 exhibit an electric power generation efficiency that is variable according to the electrical power delivered by the source. This is a case in particular for the turbogenerators 11, and also for batteries. As a consequence, for said power sources, respective high-efficiency ranges may be defined, which are ranges of delivered electrical power for which the efficiency of the power source is maximum or near maximum. For instance, the high-efficiency range of a power source may be defined as a range of delivered electrical power for which the efficiency of the power source is comprised between its maximum efficiency and a sub-maximal efficiency, which may be defined for instance as equal to 80% or 90% of the maximal efficiency.

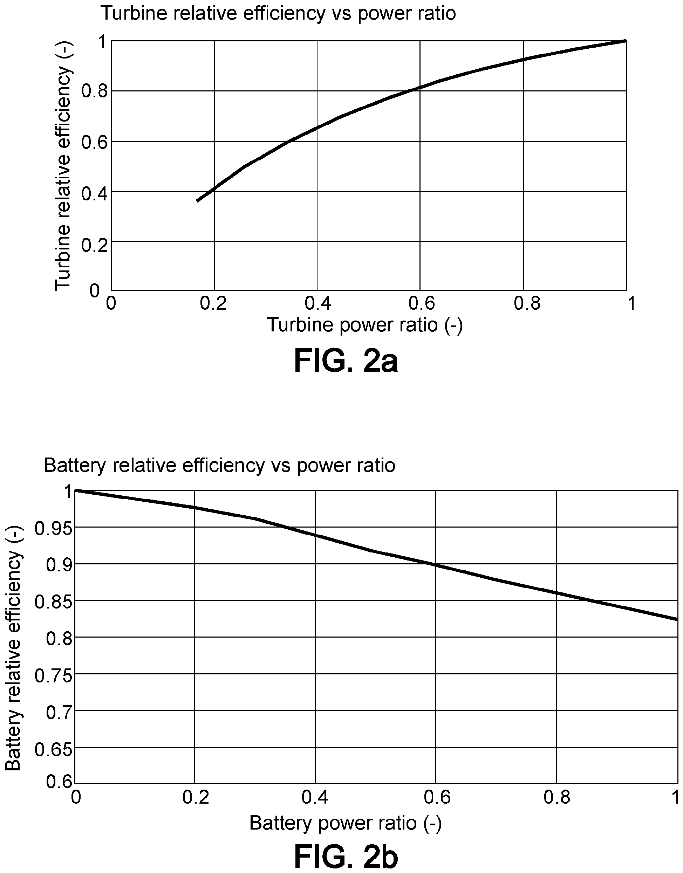

With reference to figure 2a, is shown a typical curve of electrical power production efficiency with delivered power, for a turbogenerator including an internal combustion engine. One can see that the electrical power efficiency increases with the delivered power, and that it is therefore preferable to operate the turbogenerator in a region corresponding to a high power ratio, i.e. to deliver a power near to the maximal deliverable power, in order to reach high efficiency.

According to a non-limiting example, a range of maximum efficiency, corresponding to the above-mentioned "pre-determined high efficiency range", may be defined as a range of powers delivered by the turbogenerator comprised between of 60% to 100% of the maximal deliverable power, for instance between 80 and 100%.

With reference to figure 2b, is shown a typical curve of electrical power production efficiency against delivered power, for an electric battery. One can see that, contrary to a turbogenerator, the efficiency of a battery decreases with delivered power, such that it is preferable to operate the battery at low delivered powered in order to preserve efficiency. According to a non-limiting example, a range of maximum efficiency, corresponding to the above-mentioned "pre-determined high efficiency range", may be defined as a range of powers delivered by a battery that is comprised between 0 and 60% of the maximal deliverable power of the battery, for instance between 0 and 30%.

Furthermore, the electric power generation efficiency of an electric power source, or the maximum deliverable power, may also vary according to operating parameters of the power source. Regarding turbogenerators 11, the operating parameters having influence on their electric power generation efficiency comprise, but may not be limited to, operating conditions of the aircraft, including an ambient temperature, the aircraft's altitude, and speed.

Regarding an electrical battery, the operating parameters having an influence on the electrical power efficiency may comprise an ambient temperature and/or a temperature of the battery.

Thus, figures 2a and 2b commented above are provided for constant operating parameters. In particular, the maximum available power and maximum production efficiency may change according to the operating conditions. However, the general evolution of power generation efficiency with delivered power remains unchanged, for a given electric power source, despite a change in operating conditions.

Back to figure 1, the architecture 1 further comprises at least a controller 30, configured to manage electrical power production and distribution according to the aircraft's needs, and according to the method disclosed below.

The controller 30 may comprise one or more processors 31 (which may belong to a same computer or to different computers) and storage means 32 (magnetic hard disk, optical disk, electronic memory, or any computer readable storage medium) in which a computer program product is stored, in the form of a set of program-code instructions to be executed in order to implement all or part of the steps described below. Alternatively, or in combination thereof, the controller 30 can comprise one or more programmable logic circuits (FPGA, PLD, etc.), and/or one or more specialized integrated circuits (ASIC), etc., adapted for implementing all or part of said steps. In other words, the controller 30 comprises a set of means configured by software (specific computer program product) and/or by hardware (processor, FPGA, PLD, ASIC, etc.).In embodiments, the power management method is performed by a controller 30 embarked on board the aircraft. Alternatively, the power management method may be performed in part by a controller located on the ground and in part by an embarked controller, as discussed in more details below.

When a controller 30 embarked on board the aircraft implements part or all of the power management method, said controller is preferably connected to a plurality of sensors (not shown) embarked onboard the aircraft, a plurality of computers (not shown) and inceptors (not shown), in order to be able to receive real-time data relative to the operation of the aircraft. Furthermore, said controller may also comprise at least one remote communication interface 33 enabling the reception of data (such as for instance, updates regarding weather or air traffic during the flight) from the ground, and emission of data to the ground.

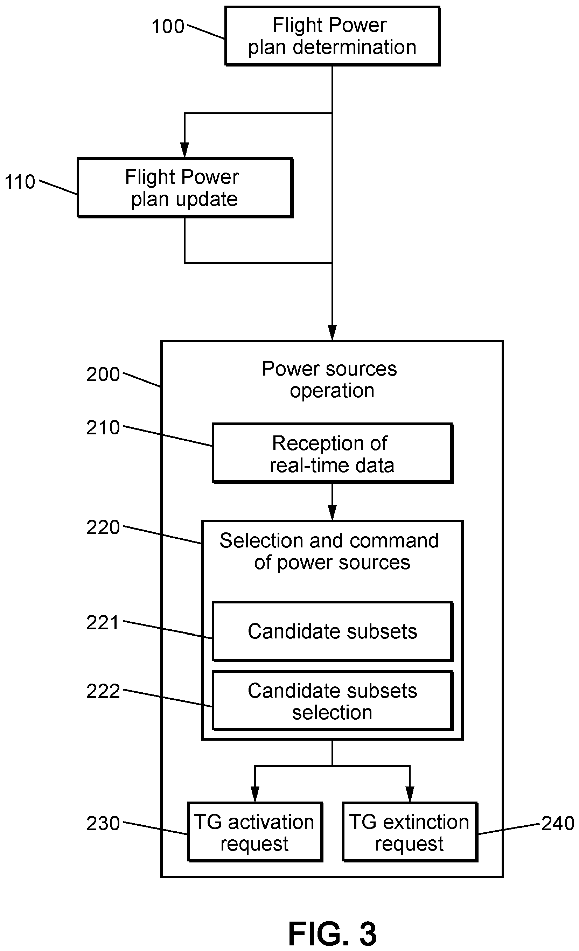

With reference to figures 3 to 5, a hybrid aircraft power management method will now be described. As mentioned, this method may be implemented by at least one controller 30.

With reference to figure 3, the method comprises a step 100 of determining, for a considered flight, a flight power plan.

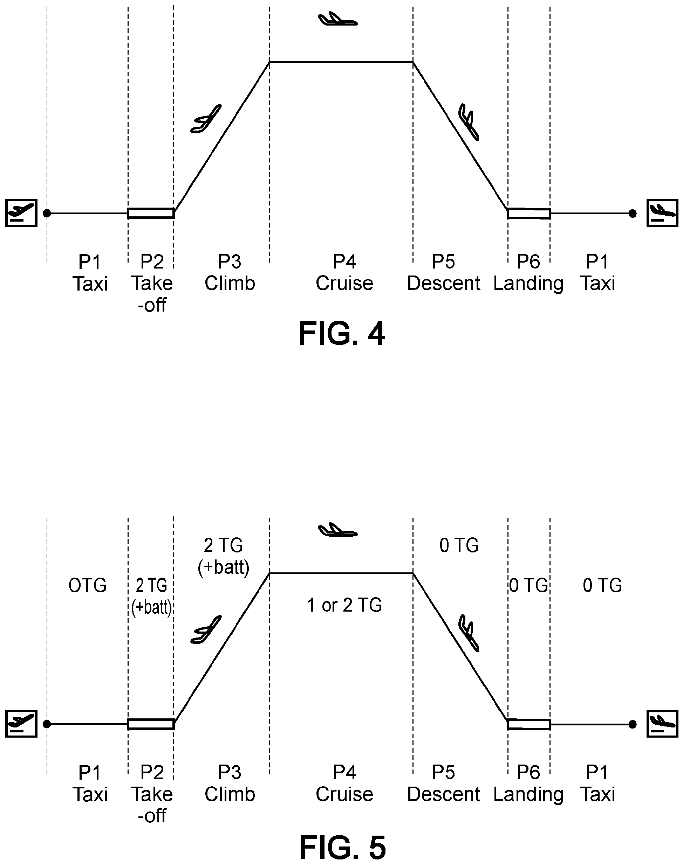

As shown schematically in figure 5, a flight power plan comprises a sequence of successive flight phases defining the aircraft's route for the flight, from origin to destination of the flight, taking into account time and spatial constraints (such as, for instance, maximum duration for the flight, geographical constraints related to mountainous areas, weather forecast, etc.), as well as parameters of the flight (such as the type of aircraft and configuration of the electric power sources and propulsion units, and the load of the aircraft) where each flight phase corresponds to respective electrical needs of the aircraft. Furthermore, the flight power plan comprises, for each flight phase, a respective subset of active electric power sources, which is determined to meet the aircraft's electrical needs of the phase.

A subset of active selected power sources 10 may include at least one electric power source 10 among all the electric power sources of the aircraft, and may include all the electric power sources 10, when necessary.

According to non-limiting examples, the subset of active electric power sources may include a single turbogenerator 11, two turbogenerators 11, a single turbogenerator complemented 11 by the complementary power source 12, or the complementary power source(s) 12 only.

Each flight phase of the flight power plan may further be defined by additional parameters including the aircraft horizontal and / or vertical trajectory and speed during the phase, as well as the electrical power delivered by each source of the subset during the phase.

The electrical needs of the aircraft associated with each flight phase include at least the propulsive needs, i.e. the electrical power necessary for the propulsion units to enable the aircraft to implement the trajectory associated with the phase. In embodiments, the electrical needs of the aircraft may include the propulsive needs as well as at least some of the non-propulsive needs, such as for instance needs of critical non-propulsive systems, which can include, but may not be limited to, de-icing or anti-icing systems. In embodiments, the electrical needs of the aircraft include all propulsive and non-propulsive needs of the aircraft.

The subset of active electric power sources associated with each phase is defined according to the aircraft's electrical need for the phase.

In embodiments, the flight power plan is determined based on at least one criterion on electric power generation efficiency. In embodiments, the flight power plan is determined to maximize efficiency of electric power generation by the electric power sources, during a determined time horizon. The determined time horizon is typically the duration of the flight.

The efficiency of electric power generation can be defined as follows:

$$\frac{\int_{t0}^{tf} \sum_i P_i(t).Eff_i(t).dt}{\sum_i E_i}$$

where $P_i(t)$ is the electric power delivered by a source i at time t, $Eff_i$ is the electric power generation efficiency of the source i, $E_i$ is the available energy of the source i over the determined time horizon, and $t_f$-$t_0$ is the determined time horizon.

As explained above, the electric power generation efficiency $Eff_i$ of a source i is variable with the delivered power at least for turbogenerators and batteries, and may also vary depending on operating parameters of the power source. Regarding the energy $E_i$, said energy typically corresponds to the available energy over the whole flight, and thus corresponds, for the turbogenerators, to the total potential energy represented by the quantity of fuel available for the flight. For electric batteries, the energy corresponds to the total energy deliverable by the batteries over the flight.

The problem of finding the best power plan can be formulated as an optimization problem that seeks the maximum energy efficiency as defined above, under time and spatial constraints, to perform the mission from origin to destination.

The decision variables may include those related to the aircraft's trajectory, speed and active power sources along the trajectory.

Although many numerical methods exist to perform the optimization, the underlying optimization algorithm can be described as follows.

First, the method starts with an initial guess for a mission profile, in which a predetermined number of phases may be used, along with a predetermined set of rules determining the subsets of power sources delivering the electrical power, and for given external operational conditions (takeoff and landing altitude, temperature, ...).

The predetermined phases may for instance include the six following principal flight phases which are generally defined for a flight plan, and which are represented in figure 3:

- Taxiing P1, which corresponds to the movement of the aircraft on the ground under its own power, to reach a runway from an airport's gate or to reach an airport's gate from the runway, thus a flight typically comprises two taxiing phases, one before takeoff and one after landing,
- Takeoff P2, where the aircraft leaves the ground and becomes airborne,
- Ascent or climb P3, which is the phase during which the aircraft increases its altitude, and which follows the takeoff and precedes the cruise,
- Cruise P4, which is the phase of the flight when the aircraft levels off after the climb. The cruise may itself comprises a plurality of distinct flight phases, according to different needs of the aircraft of the cruise, corresponding for instance to various speeds or altitudes of the aircraft,
- Descent P5, which is phase during which the aircraft decreases its altitude after cruise and before landing, and
- Landing P6, which is the phase at which the aircraft reaches the ground.

The predetermined rules determining the subset of active electrical power sources associated with each phase may for instance be the following, in particular in the case where the aircraft comprises two turbogenerators and when the complementary power source includes a battery:

- when $P \leq P_{comp}$, where $P$ is the estimated power for the phase, $P_{comp}$ is the amount of electrical power available from the battery, and said power from the battery $P_{comp}$ can be supplied over the whole current flight phase ($P_n$), then the subset of active power sources consists in the battery only,

- when $P_{comp} < P \leq P_{TG}$ where $P_{TG}$ is the power available from a single turbogenerator 11 at the estimated aircraft's operating conditions for the phase, then the subset of active power sources consists in a single turbogenerator 11,

- when $P_{TG} < P \leq P_{TG} + P_{comp}$, then the subset of active power sources consists in a single turbogenerator and the battery,

- when $P_{TG} + \Delta P < P \leq 2*P_{TG}$, then the subset of active power sources consists in two turbogenerators, and

- when $2*P_{TG} < P$, then the subset of active power sources consists in two turbogenerators and the battery.

Once an initial power plan is defined, an aircraft performance model, which can calculate energy used based on flown mission profile, is evaluated on said initial power plan.

The output is aggregated into the objective function, corresponding to the function given above regarding efficiency of electric power generation.

The feasibility of the constraints, such as those imposed on flight duration, or spatial constraints (related for example to the flight over mountainous areas, with the required margins) are then evaluated.

If the proposed mission profile is feasible, and a predetermined convergence criterion has been achieved, the optimization procedure terminates, providing in output the optimal mission profile and the related flight power plan.

If the proposed mission profile is not feasible, or the convergence criterion is not achieved, then the parameters of the phases are then changed (e.g. phase duration, speed, altitude), and the above-mentioned procedure is repeated.

Examples of convergence criterion include: optimality criteria for the objective function within a given tolerance, rate of change of input variables within a given tolerance, etc.

Therefore, it should be noted that, within the context of the present disclosure, the phases of a flight power plan may not be limited to the above-listed flight phases P1 to P6. In particular, some of the above phases may be themselves decomposed into phases, according to the corresponding electrical power needs, including propulsive and non-propulsive needs. Notably, the cruise and climb phases may be decomposed into a plurality of phases.

In embodiments, the flight power plan is determined 100 at least once before the flight. When generated before the flight, decision variables such as payload and energy to be loaded (for instance, fuel) can be included in the set of the decision variables to be optimized.

In embodiments, the method may then include updating 110 the flight power plan during the flight. Regarding updates performed during the flight, some of the above-mentioned variables might be excluded from the set of decision variables to be optimized, such as the payload and energy to be loaded. Moreover, the computation of an updated flight power plan may be performed taking into account actualized variables including the amount of remaining fuel, the remaining load of the batteries, the remaining distance of the flight, the current speed and altitude of the aircraft, etc.

In embodiments, updating 110 the flight power plan during the flight may be performed at regular intervals, i.e. at a frequency which may be comprised between once per minute and once per hour, for instance of once every five or ten minutes. In that case, the computations for determining an optimal flight power plan may be performed at said regular intervals, and the flight power plan selected for the flight is changed only when the results of the computations differ from the currently implemented flight power plan by a predetermined distance.

Alternatively or in combination, updates of the flight power plan may be required by the pilot during the flight.

Once the flight power plan is determined, the method then comprises operating 200 the electric power sources during the flight based on said determined flight power plan. This step is implemented by a controller 30 that is embarked on board the aircraft.

Operating the power source is based on the determined flight power plan, but also takes into account real-time data in order to ensure permanently meeting the aircraft's electrical needs, i.e. at least the aircraft's propulsive needs, and possibly also non-propulsive needs.

Accordingly, operating 200 the electric power sources comprises a substep 210, which can be implemented throughout the flight, at a determined frequency, during which the controller 30 receives data, preferably real-time data, including:

- An amount of electrical power to meet the aircraft's propulsive needs, and optionally part or all non-propulsive needs, herein after denoted $P_r$, and
- Operating conditions of the electric power sources.

The amount of electrical power to meet the aircraft's propulsive and non-propulsive needs may comprise:

- On the one hand, a request of electrical power supply for the electric propulsion units 20, i.e. a value of electrical power to be delivered to each electric propulsion unit to enable meeting the propulsive needs of the aircraft. The request of electrical power supply for the electric propulsion units 20 may be obtained from a command of the pilot on the aircraft's throttle, which is converted into a request for thrust and then into a request for electrical power.

- On the other hand, a request of electrical power supply for non-propulsive needs of the aircraft. Said data may include a current (i.e. instantaneous) power consumption of the non-propulsive equipments of the aircraft, and/or an operating mode of some non-propulsive, electrically intensive equipments, such-as de-icing equipments. Said data may also include operating parameters of the flight affecting the use of some equipments, such as conditions of pressure and temperature outside the aircraft.

The operating conditions of the electric power sources 10 may include:

- A current operating state of each electric power source 10, namely whether it is on or off (in particular for the turbogenerators, this refers to the operating state of the internal combustion engines),
- A current value of electrical power provided by each electric power source 10,
- Operating parameters affecting the electric power generation efficiency of each electric power source and which may include at least one or more of the following:

    ▪ Ambient temperature,
    ▪ Aircraft's speed,
    ▪ Aircraft's altitude,
    ▪ Temperature of each battery, when applicable.

The frequency at which the pieces of data listed above are received may for instance be comprised 1 and 100Hz, for instance between 1 and 50 Hz, for instance between 10 and 50Hz, for instance between 20 and 30Hz.

Operating 200 the electric power sources then comprises, based on the received data and the flight power plan, selecting 220 a subset of active electric power sources to provide the requested amount of electrical power, and issuing a power supply command for each selected power source, comprising an electrical power value to be delivered by each power source.

The selected subset of active electric power sources and the electrical power value delivered by the sources must permanently meet at least the aircraft's propulsive needs. In embodiments, the subset's selection is under the constraint of permanently meeting the propulsive needs and at least some non-propulsive needs, corresponding for instance to critical non-propulsive systems. In some situations, such as emergency situations, said constraints may lead to diverge from the flight power plan, to ensure aircraft's safety to the detriment of power generation efficiency. As a non-limiting example, in case of default of a turbogenerator, a remaining turbogenerator and a battery may be used jointly to meet electrical needs of the aircraft even if the electric power generation efficiency of one or more of the sources is not maximal or within its high efficiency range.

However, when the real-time data correspond to the conditions taken into account for the elaboration of the flight power plan, the selected subset of power sources and delivered power comply with the flight power plan.

When the selected subset of power sources differs from the previously operated subset of power sources, step 200 may further include a step of issuing an activation or extinction request to at least one power source. In particular, it may include issuing at least one activation 230 request of the internal combustion engine of a turbogenerator within the selected subset of sources and which was previously off. Conversely, step 200 may also include issuing at least one extinction 240 request of the internal combustion of a turbogenerator that was previously active and that is not within the selected subset of electric power sources.

According to a non-limiting example, the controller is configured to select the subset of electrical power sources according to the following rules:

- When the received amount of electrical power $P_r$ is lower than the power available $P_{comp}$ (within the high-efficiency range) from the complementary power sources 12, and said power from the complementary power sources can be supplied over the whole current flight phase $P_n$, then the electric propulsion units 20 are fed only by the complementary power sources 12, and the internal combustion engines 13 of both turbogenerators are off. This can correspond for instance to the taxiing phases, as well as the descent and landing phases.
- when the request of electrical power $P_r$ is higher than the power available from the complementary power sources, but lower than the power available from a single turbogenerator at current aircraft's operating conditions, then the electrical power is supplied by a single turbogenerator. This can correspond for instance to a cruise phase.
- when the request of electrical power $P_r$ is comprised between the power available $P_{TG}$ from a single turbogenerator at current aircraft's operating conditions, and $P_{TG} + P_{comp}$, and $P_{comp}$ can be supplied by the complementary power sources over the whole current flight phase, then the electrical power is supplied by a single turbogenerator and the complementary power source.

- when the request for electrical power $P_r$ is comprised between $P_{TG} + P_{comp}$ and twice the power available from a single turbogenerator, then the electrical power is supplied by two turbogenerators,

- when the request of electrical power is higher than twice the power available from a single turbogenerator at current aircraft's operating conditions, then the electric propulsion units are fed at least by the two turbogenerators, complemented by the complementary power sources. This can correspond for instance to the take-off phase and climb phase.

In embodiments, step 220 is preferably implemented in order to reduce the number of activations and extinctions of the turbogenerators. Therefore, selecting a subset of electric power sources based on the received real-time data and on the flight power plan may comprise:

- Determining at least one candidate subset 221 of electric power sources based on the received real-time data, such that the candidate subset of electric power sources is able to deliver the required amount of electrical power, and, optionally, such that each electric power source of the subset operates in a respective high-efficiency range, and,
- In view of the flight power plan, selecting 222 the candidate subset of electric power sources that satisfies a determined criterion on the numbers of turbogenerators ignition or extinction.

The determined criterion may be of minimizing the number of turbogenerator's ignitions and extinctions over the whole flight.

Thus, according to an example, if a candidate subset comprises two turbogenerators and another candidate subset comprises one turbogenerator complemented by a battery, and if the next phase of the flight is operated with two turbogenerators, the controller can elect the first subset and activate a second turbogenerator,

A non-limiting example is provided with reference to figure 5, according to which a typical flight can be performed with the following power management strategy, where the strategy is defined both by the selected sources which are used for providing electrical power to the propulsion units, and by the respective share of power provided by each power source:

- Taxi-out (P1), i.e. taxi to leave the airport's gate and reach the runway, is carried out using only the complementary power source(s) 12. This phase can also be used to switch on the turbogenerators 11.
- During take-off (P2), power is generated by turbogenerators 11, with the complementary power sources that can add additional power, whenever required by the field performance at the given altitude and temperature. In case of turbogenerator failure after V1, i.e. after reaching the speed beyond which takeoff should no longer be aborted, the complementary power sources can increase their contribution to the power distribution, hence minimizing field performance penalty.

- During climb (P3), turbogenerators contribute to most of the power, while being operated in their respective efficiency ranges, and additional power is provided by the complementary power sources, if required.
- Cruise (P4) can be carried out in different modes, depending on the altitude and speed:

  ○ For shorter missions, performed at lower altitudes (e.g. below FL100 which corresponds to approximately 3048 meters), one of the two turbogenerators 11 can be switched off. Power is therefore supplied by one turbogenerator 11, optionally complemented by a complementary power source 12.
  ○ For longer missions, at higher altitudes, for instance comprised between FL100 and FL250 (corresponding approximately to 7620 meters), the two turbogenerators 11 continue to supply the power.

- During descent (P5), the active turbogenerators can be switched off. Power can be provided exclusively by the complementary power sources.
- In case of nominal approach and landing (P6), the end of the flight is performed exclusively relying on the complementary power sources.
- In case of go around, power required to gain altitude is provided by the complementary power sources, and one or more turbogenerators are switched on again. From there onwards, power from turbogenerators is used for further landing attempts, or to reach an alternative airport.

As can be readily understood from the above example, the possibility of activating one or two turbogenerators according to the needs for power, enables using the turbogenerators in their respective efficiency range, which is typically below the maximum power deliverable by each turbogenerator, over a longer duration than conventional flights.

Accordingly, the sizing of the turbogenerators may be reduced.

According to embodiments, the turbogenerators are therefore sized such that:

- The at least two turbogenerators, i.e. the total number of turbogenerators of the aircraft, operate at a pre-determined high efficiency operating point during cruise at high altitude, and
- A subset of turbogenerators, which comprises at most all turbogenerators of the aircraft minus one, can operate at a pre-determined high efficiency operating point during cruise at intermediate altitude.

Said sizing is preferably considered for a speed of the aircraft which is comprised between 120 % and 150% of the stall speed at said altitudes, the stall speed being expressed as a true air speed. In embodiments, the sizing is performed for a speed comprised between 120% and 150% of the stall speed, for instance equal to 140% of the stall speed.

The high efficiency operating point corresponds to a delivered electric power that is comprised between 90% and 100% of the maximal deliverable power, considered in continuous operating regime (being noted that the maximal deliverable power in non continuous operating regime, such as takeoff, may be greater), and preferably between 95% and 100% of the maximal deliverable power, for instance equal to 100%.

Such a sizing is significantly reduced as compared to traditional thermal propulsion architectures in which turbomachines are sized according to takeoff power needs, and therefore oversized for cruise, thereby operating in sub-optimal power ranges during cruise.

**Claims**

1. A hybrid aircraft power management method,

  wherein the hybrid aircraft comprises:

   - a plurality of electric power sources (10), comprising:

     ◦ at least two turbogenerators (11) each comprising an internal combustion engine (13) and at least one electrical generator (14), and
     ◦ at least a complementary power source (12), and

   - a plurality of electric propulsion units (20),

  each electric propulsion unit being connected to at least two turbogenerators (11) and at least a complementary power source, and
  wherein the hybrid aircraft power management method comprises:

   - determining (100), for a considered flight, a flight power plan, and
   - based on the determined flight power plan, operating (200) the electric power sources during the flight,

  wherein the flight power plan comprises a sequence of successive flight phases corresponding to respective electrical needs of the aircraft, and, for each flight phase, a respective subset of active electric power sources, wherein the subset of active electric power sources corresponding to a phase is determined to provide an amount of electrical power meeting the aircraft's electrical needs of the flight phase.

2. The hybrid aircraft power management method according to claim 1, wherein the flight power plan is determined to maximize efficiency of electric power generation by the electric power sources, during a determined time horizon.

3. The hybrid aircraft power management method according to claim 2, wherein the determined time horizon is the duration of the flight.

4. The hybrid aircraft power management method according to claim 2 or 3, wherein the efficiency of electric power generation is defined as:

$$\frac{\int_{t0}^{tf} \sum_i P_i(t).Eff_i(t).dt}{\sum_i E_i}$$

wherein $P_i(t)$ is the electric power delivered by a source i at time t, $Eff_i$ is the electric power generation efficiency of the source i, $E_i$ is the available energy of the source i over the whole flight, and $t_f$-$t_0$ is the determined time horizon.

5. The hybrid aircraft power management method according to any of the preceding claims, comprising an initial determination (100) of the flight power plan before the flight, and at least one iteration (110) of updating the flight power plan during the flight.

6. The hybrid aircraft power management method according to any of the preceding claims, wherein operating (200) the electric power sources during the flight in accordance with the determined flight power plan comprises:

   - Receiving (210) real-time data including:

     ◦ an amount of electrical power demand to meet the aircraft's electrical needs,
     ◦ operating conditions of the electric power sources, and

   - based on the received real-time data, and on the flight power plan, selecting (220) a subset of active electric power sources to provide the amount of electrical power, and issuing a power supply command for each selected power source, comprising an electrical power value to be delivered by each power source.

7. The hybrid aircraft power management method according to claim 6, wherein selecting (220) a subset of active electric power sources based on the received real-time data and on the flight power plan comprises:

- Determining (221) at least one candidate subset of electric power sources based on the received real-time data, such that the candidate subset of electric power sources is able to deliver the amount of electrical power, and,
- In view of the flight power plan, selecting (222) the candidate subset of electric power sources that satisfies a determined criterion on the number of turbogenerators ignitions or extinctions.

8. The hybrid aircraft power management method according to claim 7, wherein the determined criterion is of minimizing the number of turbogenerator's ignitions and extinctions over the whole flight.

9. The hybrid aircraft power management method according to any of the preceding claims, wherein the aircraft comprises two turbogenerators (11) and at least one battery (12), and determining the flight power plan comprises:

- determining, for at least one phase of the flight, an amount of electrical power P needed by the aircraft, and
- determining the subset of active electric power sources associated with the phase by application of at least one of the following rules:

  ∘ when $P \leq P_{comp}$, where $P_{comp}$ is the amount of electrical power available from the battery (12), and said power from the battery $P_{comp}$ can be supplied over the whole current flight phase ($P_n$), then the subset of active power sources consists in the battery (12) only,
  ∘ when $P_{comp} < P \leq P_{TG}$ where $P_{TG}$ is the power available from a single turbogenerator (11) at current aircraft's operating conditions, then the subset of operated power sources consists in a single turbogenerator (11),
  ∘ when $P_{TG} < P \leq P_{TG} + P_{comp}$, then the subset of active power sources consists in a single turbogenerator and the battery,
  ∘ when $P_{TG} + P_{comp} < P \leq 2*P_{TG}$, then the subset of active power sources consists in two turbogenerators, and
  ∘ when $2*P_{TG} < P$ then the subset of active power sources consists in two turbogenerators and the battery.

10. The hybrid aircraft power management method according to claim 9, wherein the flight power plan comprises at least the following phases and associated subsets of active electric power sources:

- Phases of take-off and climb, wherein the subset of active power sources includes at least the two turbogenerators (11),
- At least a cruise phase, wherein the subset of active power sources includes one or two turbogenerators (11), depending on the altitude of the cruise,
- Phases of descent and landing, wherein the subset of active power sources includes the at least one battery (12) and the two turbogenerators (11) are turned off.

11. The hybrid aircraft power management method according to any of the preceding claims, wherein the aircraft further comprises non-propulsive systems (40), and the aircraft's electrical needs encompass propulsive and non-propulsive electrical needs.

12. A hybrid aircraft power management device, for an aircraft comprising,

- a plurality of electric power sources (10), comprising:

  ∘ at least two turbogenerators (11) each comprising an internal combustion engine (13) and at least one electrical generator (14), and
  ∘ at least a complementary power source (12), and

- a plurality of electric propulsion units (20), each electric propulsion unit being connected to at least two turbogenerators (11) and at least a complementary power source,
wherein the device comprises at least a controller (30) configured to:

  - determine, for a considered flight, a flight power plan,

  wherein the flight power plan comprises a sequence of successive flight phases corresponding to respective electrical needs of the aircraft, each flight phase being associated with a respective subset of active electric power sources determined to provide an amount of electrical power meeting the aircraft's electrical needs, and

  - operate the electric power sources during the flight in accordance with the determined flight power plan,

  wherein the determination of the flight power plan is implemented to maximize electric power generation efficiency among the electric power sources, during a determined time horizon.

13. A hybrid aircraft power architecture, comprising:

- a plurality of electric power sources (10), comprising:

  ◦ at least two turbogenerators (11) each comprising an internal combustion engine (13) and at least one electrical generator (14), and
  ◦ at least a complementary power source (12), and

- a plurality of electric propulsion units (20), each electric propulsion unit being connected to at least two turbogenerators (11) and at least a complementary power source,
wherein the turbogenerators (11) are sized such that:

  - said at least two turbogenerators operate at a pre-determined high efficiency operating point during cruise at high altitude,
  - a subset of turbogenerators, including at most all turbogenerators minus one, operate at a pre-determined high efficiency operating point during cruise at intermediate altitude.

14. The hybrid aircraft architecture according to claim 13, wherein the turbogenerators are sized such that:

  - said at least two turbogenerators operate in a pre-determined high efficiency range during cruise at high altitude, for a speed comprised between 120 % and 150 % of the stall speed at said altitude,
  - a subset of turbogenerators, including at most all turbogenerators minus one, operate in a pre-determined high efficiency range during cruise at intermediate altitude, for a speed comprised between 120 % and 150 % of the stall speed at said altitude.

15. The hybrid aircraft architecture according to claims 13 or 14, further comprising at least one controller (30) configured to implement the method according to any of claims 1 to 11.

**FIG. 1**

Turbine relative efficiency vs power ratio

FIG. 2a

Battery relative efficiency vs power ratio

FIG. 2b

100 — Flight Power plan determination

110 — Flight Power plan update

200 — Power sources operation

210 — Reception of real-time data

220 — Selection and command of power sources

221 — Candidate subsets

222 — Candidate subsets selection

230 — TG activation request

240 — TG extinction request

## FIG. 3

| P1 | P2 | P3 | P4 | P5 | P6 | P1 |
|------|--------------|-------|--------|---------|---------|------|
| Taxi | Take<br>-off | Climb | Cruise | Descent | Landing | Taxi |

## FIG. 4

| P1 | P2 | P3 | P4 | P5 | P6 | P1 |
|------|--------------|-------|--------|---------|---------|------|
| Taxi | Take<br>-off | Climb | Cruise | Descent | Landing | Taxi |

## FIG. 5

Europäisches
Patentamt

European
Patent Office

Office européen
des brevets

# EUROPEAN SEARCH REPORT

**Application Number**

EP 24 30 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/194615 A1 (KITA AKINORI [JP] ET AL) 23 June 2022 (2022-06-23) * paragraphs [0005], [0043], [0052] - [0054], [0056], [0057], [0067] - [0071], [0075] - [0078], [0084], [0093]; figures 1-5,7,9,13 * | 1-15 | INV. B64D35/024 B64D27/33 |
| X | US 2022/194577 A1 (KITA AKINORI [JP] ET AL) 23 June 2022 (2022-06-23) * paragraphs [0004], [0037] - [0042]; claim 5; figure 23 * | 1-3,12, 13 | |
| X | US 2022/185489 A1 (THIRIET ROMAIN JEAN GILBERT [FR] ET AL) 16 June 2022 (2022-06-16) * paragraphs [0006], [0021] - [0025]; figures 1,3 * | 1,2,12 | |
| X | KR 2023 0173728 A (ASCENDANCE FLIGHT TECH [FR]) 27 December 2023 (2023-12-27) * paragraphs [0053], [0054], [0086], [0091] - [0099]; figure 1 * | 1,12 | TECHNICAL FIELDS SEARCHED (IPC) B64D B64U B64C B60L |

The present search report has been drawn up for all claims

| Place of search | Date of completion of the search | Examiner |
|---|---|---|
| Munich | 24 June 2024 | Rippel, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 588 806 A1**

## ANNEX TO THE EUROPEAN SEARCH REPORT
## ON EUROPEAN PATENT APPLICATION NO.

EP 24 30 5117

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2024

| Patent document cited in search report | Publication date | Patent family member(s) | Publication date |
|---|---|---|---|
| US 2022194615 A1 | 23-06-2022 | CN 114655429 A | 24-06-2022 |
| | | EP 4019406 A1 | 29-06-2022 |
| | | JP 2022099063 A | 04-07-2022 |
| | | US 2022194615 A1 | 23-06-2022 |
| US 2022194577 A1 | 23-06-2022 | CN 114655430 A | 24-06-2022 |
| | | JP 7430134 B2 | 09-02-2024 |
| | | JP 2022099071 A | 04-07-2022 |
| | | US 2022194577 A1 | 23-06-2022 |
| US 2022185489 A1 | 16-06-2022 | CA 3136789 A1 | 12-11-2020 |
| | | CN 113840777 A | 24-12-2021 |
| | | EP 3966108 A1 | 16-03-2022 |
| | | FR 3095806 A1 | 13-11-2020 |
| | | JP 7447149 B2 | 11-03-2024 |
| | | JP 2022531693 A | 08-07-2022 |
| | | US 2022185489 A1 | 16-06-2022 |
| | | WO 2020225510 A1 | 12-11-2020 |
| KR 20230173728 A | 27-12-2023 | BR 112023023601 A2 | 06-02-2024 |
| | | CA 3218594 A1 | 17-11-2022 |
| | | CN 117693472 A | 12-03-2024 |
| | | EP 4337535 A1 | 20-03-2024 |
| | | FR 3122642 A1 | 11-11-2022 |
| | | JP 2024518970 A | 08-05-2024 |
| | | KR 20230173728 A | 27-12-2023 |
| | | WO 2022238653 A1 | 17-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11465763 A